# EUROPÄISCHE PATENTSCHRIFT

(11) **EP 3 161 928 B1**
(45) Veröffentlichungstag und Bekanntmachung des Hinweises auf die Patenterteilung: **24.07.2019**
(21) Anmeldenummer: 15750709.6
(22) Anmeldetag: 12.08.2015
(51) Int. Cl.: H02J 3/14

(54) **ENERGIEMANAGEMENTSYSTEM ZUR STEUERUNG EINER EINRICHTUNG, COMPUTERSOFTWAREPRODUKT UND VERFAHREN ZUR STEUERUNG EINER EINRICHTUNG**
ENERGY MANAGEMENT SYSTEM FOR CONTROLLING A DEVICE, COMPUTER SOFTWARE PRODUCT, AND METHOD FOR CONTROLLING A DEVICE
SYSTÈME DE GESTION D'ÉNERGIE PERMETTANT DE COMMANDER UN DISPOSITIF, PRODUIT-PROGRAMME D'ORDINATEUR ET PROCÉDÉ DE COMMANDE D'UN DISPOSITIF

(30) Priorität: 08.09.2014 DE 102014217929
(43) Veröffentlichungstag der Anmeldung: 03.05.2017
(73) Patentinhaber: Siemens Schweiz AG, 8047 Zürich (CH)
(72) Erfinder: BUCHSTALLER, Dominic, 91341 Röttenbach (DE); LEHMANN, Thomas, 91052 Erlangen (DE)
(74) Vertreter: Maier, Daniel Oliver
(86) Internationale Anmeldenummer: PCT/EP2015/068538
(87) Internationale Veröffentlichungsnummer: WO 2016/037788

(56) Entgegenhaltungen:
- DE-A1-102012 203 121
- US-A1- 2008 217 471
- US-A1- 2014 046 495

## Beschreibung

Die Erfindung betrifft ein Energiemanagementsystem zur Steuerung einer an ein Energieversorgungsnetz angeschlossenen gesteuerten Einrichtung mit mehreren energieumsetzenden Elementen, wobei die Summe der maximalen Energieumsätze der Elemente wenigstens 3 kW ist, sowie ein Computersoftwareprodukt und ein Verfahren zur Steuerung einer Einrichtung.

Großgebäude und Industrieanlagen verfügen häufig über Automationssysteme, die die Infrastruktur der Großgebäude und der Industrieanlagen steuert. Als Teil dieser Automationssysteme können Energiemanagementsysteme vorgesehen sein, die zur energieeffizienten Steuerung der angeschlossenen Komponenten dienen. Sind sowohl Energieerzeuger, wie beispielsweise Fotovoltaikanlagen, und Energieverbraucher vorgesehen, kann die Erzeugung und der Verbrauch von Energie koordiniert werden. Neben einem reinen Management der elektrischen Energie können zusätzlich weitere Energieformen, beispielsweise Gas, Dampf und Fernwärme, berücksichtigt werden.

Die genannten Automationssysteme mit integrierten Energiemanagementsystemen sind relativ komplex und müssen typischerweise für den einzelnen Anwendungsfall angepasst werden, womit das Vorsehen dieser Systeme eine hohe Anfangsinvestition erfordert. Während es aus ökologischen und ökonomischen Gründen vorteilhaft wäre, auch für andere gesteuerte Einrichtungen, beispielsweise Wohnhäuser, Ladengeschäfte und kleinere Industrieanlagen, ein Energiemanagement vorzusehen, ist dies häufig aufgrund der hohen Anfangsinvestition und der komplexen Anpassung der eingangs genannten Systeme an den Anwendungsfall nicht attraktiv. Daher werden im Rahmen der Gebäudeautomation typischerweise nur Automationssysteme eingesetzt, die ausschließlich individuelle Geräte energieeffizient steuern und überwachen. Zudem sind Systeme bekannt, die den Betrieb von einzelnen Verbrauchern, beispielsweise einer Waschmaschine, in Abhängigkeit von Betriebsparametern einer Fotovoltaik steuern können.

Die US 2014/0046495 A1 zeigt ein Verfahren zum Optimieren eines zeitlichen Verlaufs eines Verbrauchs von elektrischer Leistung durch eine Gruppe von unterschiedlichen Verbrauchern im Hinblick auf ein Angebot von elektrischer Leistung.

Ferner beschreibt die US 2008/0217471 A1 ein elektrisches Stromverteilungssystem. Das Stromverteilungssystem umfasst einen Leistungsregler, der über ein Gateway-Modul mit einem Hauptdatenbus eines Flugzeugsystems kommuniziert. Des Weitern umfasst das Stromverteilungssystem ein zustandsbasiertes Wartungsmodul, das über ein von dem Hauptdatenbus getrenntes Kommunikationsnetz mit dem Leistungsregler kommuniziert.

Außerdem offenbart die DE 10 2012 203 121 A1 ein Energiemanagementsystem. Das Energiemanagementsystem umfasst Prognosemittel zur Erstellung von Energieverbrauchsprognosen für Verbrauchseinrichtungen. Zudem umfasst das Energiemanagementsystem Steuermittel zur An- und Abkopplung von Erzeugungseinrichtungen an das beziehungsweise von einem Netzwerk sowie zur Regelung der Aufnahme und/oder Rückspeisung von Energie durch Speichereinrichtungen. Außerdem umfasst das Energiemanagementsystem Kommunikationsmittel zur Übermittlung der von den Prognosemitteln erstellten Energieverbrauchsprognosen an die Steuermittel.

Der Erfindung liegt somit die Aufgabe zugrunde, ein Energiemanagementsystem für eine gesteuerte Einrichtung anzugeben, das demgegenüber verbessert ist und insbesondere leicht an die Anforderungen verschiedener gesteuerter Einrichtungen anpassbar ist.

Die Aufgabe wird erfindungsgemäß durch ein Energiemanagementsystem der eingangs genannten Art gelöst, wobei das Energiemanagementsystem mehrere Module umfasst, die jeweils wenigstens eine im Rahmen der Steuerung der gesteuerten Einrichtung genutzte Funktion bereitstellen, wobei als Funktionen wenigstens eine Planungsfunktion zur Planung eines zukünftigen Energieumsatzes wenigstens eines der energieumsetzenden Elemente, wenigstens eine Erfassungsfunktion zur Erfassung von wenigstens einem einen momentanen Energieumsatz wenigstens eines der energieumsetzenden Elemente betreffenden Erfassungsparameters und wenigstens eine Steuerfunktion zur Vorgabe wenigstens eines einen Energieumsatz wenigstens eines der energieumsetzenden Elements beeinflussenden Steuerparameters bereitgestellt werden, wobei jedes der Module ausgebildet ist, mit jeweils wenigstens einem weiteren der Module über eine jeweilige Kommunikationsverbindung zu kommunizieren, wodurch Funktionen des Moduls durch das weitere Modul nutzbar sind und/oder Funktionen des weiteren Moduls durch das Modul nutzbar sind. Außerdem umfasst das Energiemanagementsystem als wenigstens eines der Module ein Speichermodul, das an wenigstens ein weiteres der Module Funktionen zum Abruf von Konfigurationsdateien bereitstellt, die beschreiben, welche Funktionen in dem Energiemanagementsystem bereitgestellt sind und von welchen Modulen diese bereitgestellt werden.

Erfindungsgemäß wird vorgeschlagen, einzelne Funktionen eines Energiemanagementsystems durch Module bereitzustellen, die eine entsprechende Funktionalität kapseln, so dass sie durch weitere der Module bzw. Funktionen ohne Kenntnis der internen Struktur der Funktion nutzbar ist. Durch das Vorsehen von Kommunikationsverbindungen zwischen einem Modul und jeweils wenigstens einem weiteren Modul können durch das Modul bereitgestellte Funktionen durch das weitere Modul genutzt werden und umgekehrt. Durch die erfindungsgemäße Verteilung der Funktionalität des Energiemanagementsystems auf mehrere Module kann das Energiemanagementsystem sehr leicht an verschiedene Anforderungen angepasst werden. Neben den beschriebenen Kernfunktionen, also wenigstens einer Planungsfunktion, wenigstens einer Erfassungsfunktion und wenigstens einer Steuerfunktion, können weitere Funktionen für das Energiemanagementsystem bereitgestellt werden, indem weitere Module ergänzt werden. Soll beispielsweise eine Datenerfassung von mehreren Quellen erfolgen, so ist es möglich, zusätzlich entsprechende Erfassungsmodule zu ergänzen. Auch Steueraufgaben können auf verschiedene Steuermodule verteilt werden. Wie später noch genauer erläutert, können auch eine Vielzahl weiterer Funktionen durch zusätzliche Module im Energiemanagementsystem bereitgestellt werden.

Die einzelnen Funktionen des Energiemanagementsystems können derart implementiert sein, dass sie bestimmte andere Funktionen des Energiemanagementsystems nutzen, falls diese bereitstehen. Steht eine andere Funktion nicht bereit, kann die jeweilige Funktion so angepasst werden, dass sie diese andere Funktion nicht nutzt. Beispielsweise kann statt eines Rückgabewerts der anderen Funktion ein vorgegebener Standardwert genutzt werden oder es kann eine alternative Funktion aufgerufen werden. Eine entsprechende Konfiguration, die angibt, welche Funktionen verfügbar sind, kann dynamisch und automatisch generiert werden. Sie kann jedoch auch bei der Installation des Energiemanagementsystems vorgegeben werden.

Durch den beschriebenen modularen Aufbau des Energiemanagementsystems ist es möglich, für einzelne Funktionen mehrere Module zur Verfügung zu stellen, die eine entsprechende Funktionalität bereitstellen, eines von mehreren alternativen Modulen zur Bereitstellung einer bestimmten Funktion in ein Energiemanagementsystem zu integrieren, beispielsweise um Planungsfunktionen mit unterschiedlicher Komplexität zu implementieren, und nur Module zu nutzen, die Funktionen implementieren, die tatsächlich zur Steuerung der gesteuerten Einrichtung benötigt werden. Der modulare Aufbau ermöglicht somit eine günstige und einfache Anpassung des Energiemanagementsystems an die jeweils gesteuerte Einrichtung. Zudem ist eine Nachrüstung neuer Funktionalitäten des Energiemanagementsystems bei Änderungen an der gesteuerten Einrichtung oder einer Änderung der Anforderungen an das Energiemanagementsystem besonders einfach möglich.

Die Funktionen des Energiemanagementsystems können insbesondere als Dienste einer serviceorientierten Architektur implementiert sein. Entsprechend können die Funktionen insbesondere abgeschlossen sein, eigenständig genutzt werden, über ein Netzwerk bereitgestellt werden, eine wohl definierte Schnittstelle aufweisen und/oder plattformunabhängig nutzbar sein. Dabei sollten Abhängigkeiten zwischen den verschiedenen Funktionen weitgehend reduziert werden und eine Auswahl, welche der Funktionen genutzt wird, kann, wie oben erläutert, dynamisch während des Betriebs des Energiemanagementsystems erfolgen.

Die energieumsetzenden Elemente können jeweils Energie aus dem Energieversorgungsnetz verbrauchen und/oder Energie an das Energieversorgungsnetz bereitstellen. Durch das Energiemanagementsystem kann sowohl eine Koordinierung des internen Verbrauchs und der internen Bereitstellung von Energie erfolgen als auch eine Koordination des Energieverbrauchs bzw. der Energiebereitstellung mit einer dem Energieversorgungsnetz zugeordneten, beispielsweise von einem Energieversorger betriebenen Einrichtung. Energieumsetzende Elemente mit besonders großem Energieverbrauch können beispielsweise zu Zeiten betrieben werden, zu denen eine starke Einspeisung von weiteren einrichtungsexternen Energieerzeugern oder ein geringer Verbrauch von einrichtungsexternen Verbrauchern erfolgt. Dies gilt umgekehrt auch für eine Bereitstellung von Energie an das Energieversorgungsnetz durch die gesteuerte Einrichtung.

Die durch die Module bereitgestellten Funktionen sind einerseits durch weitere Funktionen des gleichen Moduls und/oder durch weitere Funktionen eines anderen der Module nutzbar. Ergänzend können zumindest Teile der Funktionen durch externe Ereignisse ausgelöst werden. Insbesondere können zumindest Teile der Funktionen zu bestimmten Zeitpunkten und/oder in bestimmten Zeitintervallen genutzt werden. Auch eine ereignisbasierte Nutzung von Funktion ist möglich. So kann beispielsweise eine Erfassungsfunktion aufgerufen werden, wenn der zu erfassende Wert ein vorgegebenes Intervall verlässt.

Eine Planung eines zukünftigen Energieumsatzes, wie sie im erfindungsgemäßen Energiemanagementsystem vorgesehen ist, ermöglicht es den Betrieb der energieumsetzenden Elemente der gesteuerten Einrichtung besser zu koordinieren, wobei insbesondere bestimmte Randbedingungen berücksichtigt werden können. Für einige der energieumsetzenden Elemente, beispielsweise Heizungen und Klimaanlagen, kann es möglich sein, den zeitlichen Verlauf des Energieumsatzes zu variieren, ohne dass der Nutzen der gesteuerten Einrichtung merklich gemindert wird. Durch eine Planung des zukünftigen Energieumsatzes kann beispielsweise eine Abstimmung mit energieerzeugenden Elementen, beispielsweise einer Fotovoltaik, in der gesteuerten Einrichtung erfolgen.

Durch eine Planung eines zukünftigen Energieumsatzes ist zudem eine Abstimmung mit energieversorgungsnetzseitigen Einrichtungen möglich, so dass einem Betreiber eines Versorgungsnetzes voraussichtlich getätigte Energieumsätze frühzeitig bekannt gegeben werden können. Eine Planung kann insbesondere für ein vorgegebenes, vom Planungszeitpunkt beabstandetes Zeitintervall erfolgen. Beispielsweise kann eine Planung für ein 24-stündiges Zeitintervall erfolgen, wobei der Planungszeitpunkt 12 Stunden vor Beginn dieses Zeitintervalls liegt. Durch die Planungsfunktion kann auch eine Planung für mehrere, insbesondere unterschiedlich lange, Zeitintervalle erfolgen bzw. es können mehrere Planungsfunktionen bereitgestellt werden, wobei die Bereitstellung insbesondere durch unterschiedliche Module erfolgt und/oder eine Planung für unterschiedliche Zeitintervalle erfolgt.

Die Vorgabe des Steuerparameters durch die Steuerfunktionen kann in Abhängigkeit eines zuvor für den momentanen Zeitpunkt bzw. das momentane Zeitintervall durch die Planungsfunktion geplanten Energieumsatzes für das jeweilige energieumsetzende Element und/oder für weitere energieumsetzende Elemente erfolgen. Insbesondere kann die Vorgabe des Steuerparameters mit dem Ziel erfolgen, den Energieumsatz der gesamten gesteuerten Einrichtung an einen geplanten Energieumsatz für die gesamte gesteuerte Einrichtung anzugleichen. Die Vorgabe des Steuerparameters kann zudem in Abhängigkeit wenigstens eines durch die Erfassungsfunktion bereitgestellten Erfassungsparameters erfolgen. Häufig ist es nicht möglich, alleine durch Vorgabe von Steuerparametern den exakten Energieumsatz aller energieumsetzenden Elemente einer gesteuerten Einrichtung vorzugeben. Einige der energieumsetzenden Elemente können teilweise oder vollständig manuell bedienbar sein und/oder ihr Energieumsatz kann von externen Faktoren, beispielsweise dem Wetter, abhängig sein. Durch Erfassung von den momentanen Energieumsatz solcher energieumsetzender Elemente betreffender Erfassungsparameter kann im Rahmen der Steuerfunktion ein Steuerparameter für diese oder andere energieumsetzende Elemente vorgegeben werden, der diese Unwägbarkeiten kompensiert.

Es ist möglich, dass das erfindungsgemäße Energiemanagementsystem wenigstens ein Erfassungsmodul zur Bereitstellung wenigstens einer der wenigstens einen Erfassungsfunktion, wenigstens ein Planungsmodul zur Bereitstellung wenigstens einer der wenigstens einen Planungsfunktion und ein Steuermodul zur Bereitstellung wenigstens einer der wenigstens einen Steuerfunktion umfasst. Insbesondere können zumindest Teile der Module des Energiemanagementsystems genau eine Funktion bereitstellen. Alternativ können mehrere oder alle gleichartigen Funktionen, beispielsweise mehrere oder alle der Planungsfunktionen, durch ein einzelnes der Module bereitgestellt werden.

Die Module sind jeweils als separate Hardware-Bauelemente ausgebildet. Sie können in separaten Gehäusen anordenbar sein und separat voneinander nutzbar sein. Einzelne oder alle der Module können voneinander beabstandet sein, so dass im erfindungsgemäßen Energiemanagementsystem einzelne Module oder Gruppen von Modulen an verschiedenen voneinander beabstandeten Orten nutzbar sind. Beispielsweise können Teile der Module in einem Schaltschrank integriert sein und Teile der Module in einem davon beabstandeten Rechenzentrum und/oder an einem Benutzerarbeitsplatz.

Die Kommunikationsverbindung kann ein Kommunikationsnetzwerk sein, wobei die Module jeweils eine Kommunikationseinrichtung zur Verbindung mit dem Kommunikationsnetzwerk umfassen. Das Kommunikationsnetzwerk kann ein drahtloses Netzwerk, ein drahtgebundenes Netzwerk, oder ein Netzwerk, das abschnittsweise drahtgebunden und abschnittsweise drahtlos ist, sein. Das Netzwerkprotokoll kann ein Standardprotokoll, wie beispielsweise TCP/IP, sein. Zur Bereitstellung der Funktionen der Module an jeweils andere Module ist es vorteilhaft, wenn die Funktionen als netzwerkaufrufbare Funktionen implementiert werden. Dies ist beispielsweise über SOAP möglich. Es können jedoch auch Netzwerkprotokolle genutzt werden, die bereits das Setzen von Objekteigenschaften bzw. das Aufrufen von Funktionen über das Netzwerk unterstützen, beispielsweise BACnet oder OPC OA.

Vorteilhaft kommunizieren wenigstens drei oder alle der Module über das Kommunikationsnetzwerk oder eines der Kommunikationsnetzwerke. Insbesondere wenn zumindest Teile der Module durch sie bereitgestellte Funktionen an mehrere weitere der Module bereitstellen sollen, wären separate paarweise Kommunikationsverbindungen zwischen den Modulen relativ aufwendig zu implementieren und die Nutzung des gemeinsamen Kommunikationsnetzwerkes ist vorteilhaft.

Das erfindungsgemäße Energiemanagementsystem kann als wenigstens eines der Module ein Speichermodul umfassen, das an wenigstens ein weiteres der Module Funktionen zur Speicherung und/oder zum Abruf von Daten bereitstellt. Insbesondere kann ein Speichermodul Funktionen einer Datenbank an die weiteren Module bereitstellen. Es ist jedoch auch möglich, Funktionen zum wahlfreien Zugriff zum Lesen und/oder Schreiben von Daten bereitzustellen oder Schreibzugriffe in Form einer Ereignisprotokollierung bereitzustellen. Das Speichermodul oder eines der Speichermodule kann den weiteren Modulen auch Funktionen zum Abruf von Konfigurationsdaten bereitstellen, die beispielsweise beschreiben, welche Funktionen im jeweiligen Energiemanagementsystem bereitgestellt sind und von welchen Modulen diese bereitgestellt werden. Entsprechende Konfigurationsdaten können im Rahmen der Installation des Energiemanagementsystems vorgegeben werden. Es ist jedoch auch möglich, durch eine weitere Funktion, die auf dem gleichen Speichermodul oder auf einem anderen Modul implementiert ist, Konfigurationsänderungen zu erkennen und die Konfigurationsdaten entsprechend anzupassen.

Ein Speichermodul kann insbesondere Erfassungswerte, geplante Energieumsätze für einzelne energieumsetzende Elemente und/oder die gesamte gesteuerte Einrichtung und bereitgestellte Steuerparameter in Form einer Ereignisprotokollierung erfassen. Für die genannten und beliebige andere Datenwerte kann eine Historie bzw. ein zeitlicher Verlauf gespeichert werden.

Das erfindungsgemäße Energiemanagementsystem kann als wenigstens eines der Module ein Kommunikationsmodul umfassen, das an wenigstens ein weiteres der Module wenigstens eine Funktion zur Kommunikation mit wenigstens einer energiemanagementsystemexternen Einrichtung bereitstellt. Ein Kommunikationsmodul kann zur Kommunikation mit einer Einrichtung eines externen Dienstleisters, beispielsweise über das Internet, und/oder zur Verbindung mit einem Element der gesteuerten Einrichtung dienen und entsprechende Funktionen bereitstellen. Der externe Dienstleister kann insbesondere ein Energieversorger sein. Insbesondere können Informationen über Energiekosten, maximal verfügbare Leistungen, Vergütungen für Rückspeisungen von Energien in das Energieversorgungsnetz bzw. für Flexibilitäten der Energieabnahme oder ähnliches mit einem externen Dienstleister ausgetauscht werden.

Bei einer Nutzung des Kommunikationsmoduls zur Verbindung mit einem Element der gesteuerten Einrichtung kann das Kommunikationsmodul insbesondere als "Zwischenstation" bzw. Abstraktionsschicht bei der Erfassung von Erfassungswerten bzw. bei der Bereitstellung von Steuerparametern dienen. Die Module können untereinander in einem Netzwerk kommunizieren und über das Kommunikationsmodul kann eine Verbindung zu einem weiteren Netzwerk erfolgen, das der gesteuerten Einrichtung zugeordnet ist. Beispielsweise können Elemente der gesteuerten Einrichtung über ein BACnet- bzw. OPC UA-Protokoll basiertes Netzwerk kommunizieren und die Module können untereinander über TCP/IP und SOAP kommunizieren. Das Kommunikationsmodul kann in diesem Fall Funktionen zur Protokoll- bzw. Netzwerkumsetzung an die weiteren Module bereitstellen.

Ergänzend oder alternativ kann das Energiemanagementsystem als wenigstens eines der Module ein Prognosemodul umfassen, das an wenigstens ein weiteres der Module wenigstens eine Funktion zur Prognose wenigstens eines zukünftigen Wertes für einen Betriebsparameter der gesteuerten Einrichtung bereitstellt, wobei der Betriebsparameter durch Einflüsse außerhalb des Energiemanagementsystems und der gesteuerten Einrichtung bestimmt wird. Entsprechende Funktionen können insbesondere durch die oder eine der Planungsfunktionen genutzt werden. Beispielsweise kann der prognostizierte Betriebsparameter das Wetter, beispielsweise eine Außentemperatur, eine Windgeschwindigkeit und/oder eine Abschwächung der Sonneneinstrahlung durch eine Wolkendecke beschreiben. Entsprechende Betriebsparameter sind insbesondere für energieerzeugende Elemente, beispielsweise eine Fotovoltaikanlage oder eine Windkraftanlage, relevant. Sie beeinflussen jedoch auch den Betrieb von energieumsetzenden Elementen, die der Klimatisierung dienen, beispielsweise von Klimaanlagen und Heizungen. Alternativ oder ergänzend wäre es beispielsweise möglich, eine Menge bzw. einen Strombedarf bzw. Ankunftszeiten von zu ladenden Elektrofahrzeugen zu prognostizieren, die durch energieumsetzende Elemente der gesteuerten Einrichtung geladen werden.

Das Energiemanagementsystem kann als eines der Module ein Statistikmodul umfassen, das, insbesondere durch ein Speichermodul gespeicherte, historische Verläufe von Betriebsparametern der gesteuerten Einrichtung auswertet, um einen zukünftigen Wert des entsprechenden und/oder eines weiteren Betriebsparameters zu prognostizieren. Insbesondere kann die Statistikfunktion Tageszeiten und/oder Wochentage bei der Auswertung des historischen Verlaufs berücksichtigen.

Im Rahmen der Planung eines zukünftigen Energieumsatzes durch die Planungsfunktion und/oder der Bereitstellung eines Steuerparameters durch die Steuerfunktion ist es möglich, Optimierungsaufgaben durchzuführen, die von einer Vielzahl von Parametern abhängen können. Da entsprechende Optimierungen rechenaufwendig sein können, relativ komplex sind und unter Umständen für mehrere Funktionen bereitgestellt werden sollen, ist es vorteilhaft, wenn im Energiemanagementsystem wenigstens eine Optimierungsfunktion als separate Funktion bereitgestellt wird. Insbesondere kann das Energiemanagementsystem als wenigstens eins der Module ein Optimierungsmodul umfassen, das an wenigstens ein weiteres der Module wenigstens eine Funktion zur von wenigstens einer vorgegebenen Randbedingung abhängigen Optimierung wenigstens eines den Energieumsatz der gesteuerten Einrichtung betreffenden Betriebsparameters bereitstellt. Als Randbedingung kann beispielsweise vorgegeben werden, dass in einer Industrieanlage bei einer vorgegebenen Produktionsmenge ein Energieverbrauch minimiert wird und/oder dass durch energieerzeugende Elemente der gesteuerten Einrichtung erzeugte Energie soweit möglich durch weitere der energieumsetzenden Elemente genutzt wird, um eine Rückspeisung von Energie in das Energieversorgungsnetz zu minimieren und/oder dass unter Berücksichtigung weiterer Randbedingungen die Energiekosten minimiert werden. Die bereitgestellte Optimierungsfunktion kann insbesondere zur Multifaktorenoptimierung ausgebildet sein, das heißt mehrere Faktoren gleichzeitig optimieren. Dies ist beispielsweise durch eine Minimierung bzw. Maximierung einer gewichteten Summe über mehrere Faktoren möglich.

Das erfindungsgemäße Energiemanagementsystem kann als wenigstens eines der Module ein Bedienmodul umfassen, das an wenigstens ein weiteres der Module wenigstens eine Funktion zur Datenausgabe an einen Benutzer über eine Ausgabevorrichtung bereitstellt und/oder Benutzereingaben an einer Bedieneinrichtung erfasst und zum Aufrufen wenigstens einer Funktion wenigstens eines weiteren der Module in Abhängigkeit der Bedieneingaben ausgebildet ist. Als Ausgabevorrichtungen können insbesondere Bildschirme, aber auch Drucker genutzt werden. Benutzereingaben können durch eine Tastatur, eine Maus, Schalter, Taster oder ähnliches erfasst werden.

Neben dem Energiemanagementsystem betrifft die Erfindung ein Computersoftwareprodukt, umfassend mehrere verschiedene Computerprogramme, wobei bei einer Ausführung der Computerprogramme auf jeweils wenigstens einer Recheneinrichtung und Vernetzung dieser Recheneinrichtungen in einem Kommunikationsnetzwerk die vernetzten Recheneinrichtungen ein erfindungsgemäßes Energiemanagementsystem ausbilden, wobei die Recheneinrichtungen jeweils ein Modul bilden, wobei die Module jeweils als separate Hardware-Bauelemente ausgebildet sind, wobei das Modul wenigstens eine Funktion des Energiemanagementsystems bereitstellt, wobei jedes der Module ausgebildet ist, mit jeweils einem weiteren der Module über das Kommunikationsnetzwerk zu kommunizieren, wodurch Funktionen des Moduls durch das weitere Modul nutzbar sind und/oder Funktionen des weiteren Moduls durch das Modul nutzbar sind. Ein Speichermodul ist dazu ausgelegt, an wenigstens ein weiteres der Module Funktionen zum Abruf von Konfigurationsdateien bereitzustellen, die beschreiben, welche Funktionen in dem Energiemanagementsystem bereitgestellt sind und von welchen Modulen diese bereitgestellt werden. Zum erfindungsgemäßen Energiemanagementsystem offenbarte Merkmale lassen sich äquivalent auf das erfindungsgemäße Computersoftwareprodukt übertragen.

Zudem betrifft die Erfindung ein Verfahren zur Steuerung einer an ein Energieversorgungsnetz angeschlossenen gesteuerten Einrichtung mit mehreren energieumsetzenden Elementen durch ein Energiemanagementsystem, wobei die Summe der maximalen Energieumsätze der Elemente wenigstens 3 kW ist, wobei das Energiemanagementsystem mehrere Module umfasst, wobei die Module jeweils als separate Hardware-Bauelemente ausgebildet sind, durch die jeweils wenigstens eine im Rahmen der Steuerung der gesteuerten Einrichtung genutzte Funktion bereitstellt wird, wobei als Funktionen wenigstens eine Planungsfunktion, durch die ein zukünftiger Energieumsatz wenigstens eines der energieumsetzenden Elemente der gesteuerten Einrichtung geplant wird, wenigstens eine Erfassungsfunktion, durch die wenigstens ein einen Energieumsatz wenigstens eines der energieumsetzenden Elemente beschreibender Erfassungsparameter erfasst wird, und eine Steuerfunktion, durch die wenigstens ein einen Energieumsatz wenigstens eines der energieumsetzenden Elemente beeinflussender Steuerparameter vorgegeben wird, bereitgestellt werden, wobei durch jedes der Module mit jeweils wenigstens einem anderen der Module über eine Kommunikationsverbindung kommuniziert wird, wobei Funktionen des Moduls durch Funktionen des weiteren Moduls genutzt werden und/oder Funktionen des weiteren Moduls durch das Modul genutzt werden. Ein Speichermodul des Energiemanagementsystems stellt an wenigstens ein weiteres der Module Funktionen zum Abruf von Konfigurationsdateien bereit, die beschreiben, welche Funktionen in dem Energiemanagementsystem bereitgestellt sind und von welchen Modulen diese bereitgestellt werden.

Zum erfindungsgemäßen Energiemanagementsystem bzw. Computersoftwareprodukt erläuterte Merkmale lassen sich äquivalent auf das erfindungsgemäße Verfahren übertragen.

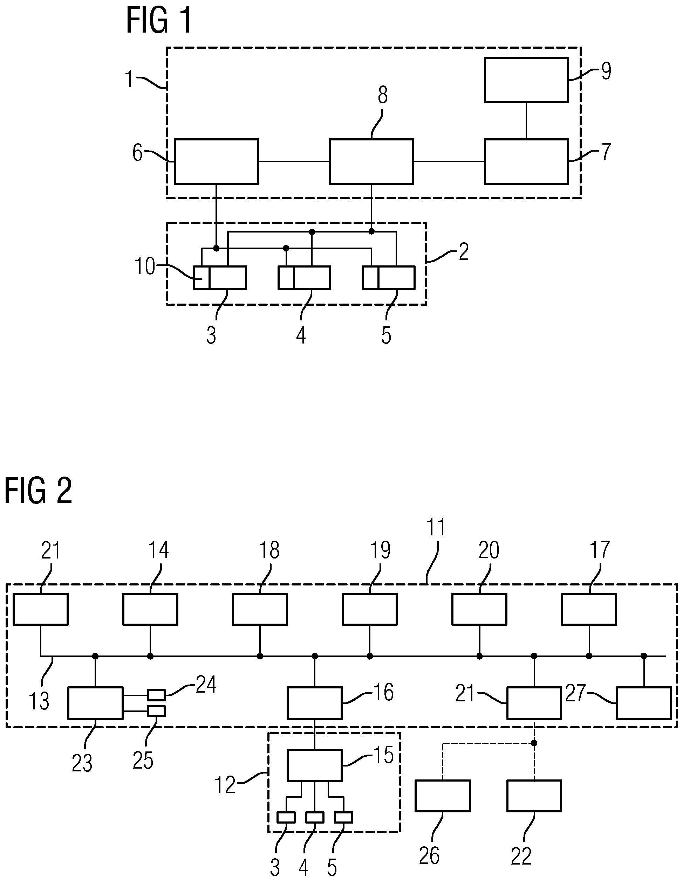

Weitere Vorteile und Einzelheiten der Erfindung zeigen die folgenden Ausführungsbeispiele sowie die zugehörigen Zeichnungen. Dabei zeigen
- Fig. 1 - 3: verschiedene Ausführungsbeispiele des erfindungsgemäßen Energiemanagementsystems.

Fig. 1 zeigt ein Ausführungsbeispiel eines Energiemanagementsystems 1 zur Steuerung einer an ein nicht gezeigtes Energieversorgungsnetz angeschlossenen gesteuerten Einrichtung 2 mit mehreren energieumsetzenden Elementen 3, 4, 5. Das Energiemanagementsystem 1 umfasst mehrere Module, nämlich ein Erfassungsmodul 6, ein Planungsmodul 7, ein Steuermodul 8 sowie ein Prognosemodul 9.

Das Erfassungsmodul 6 kommuniziert über einen Bus oder ein Netzwerk mit drei Messeinrichtungen 10, die jeweils einem der energieumsetzenden Elemente 3, 4, 5 zugeordnet sind. Das Erfassungsmodul erfasst kontinuierlich durch die Messeinrichtungen 10 bereitgestellte Messwerte und hält die aktuellen Messwerte in einem internen Speicher vor. Zudem stellt das Erfassungsmodul 6 eine Erfassungsfunktion bereit, über die ein weiteres Modul, nämlich das Steuermodul 8, vorgehaltene Messwerte als Erfassungswerte abrufen kann.

Das Planungsmodul 7 plant zu vorgegebenen Zeitpunkten die Energieumsätze für die energieumsetzenden Elemente 3, 4, 5, derart, dass vorgegebene Anforderungen an den Energieumsatz der gesamten gesteuerten Einrichtung erfüllt werden. Im Planungsmodul 7 wird lokal neben einem geplanten zeitlichen Verlauf des Energieumsatzes der energieumsetzenden Elemente für ein zukünftiges Planungsintervall der geplante zeitliche Verlauf des Energieumsatzes für ein momentan ausgeführtes Planungsintervall gespeichert. Im Rahmen der Planung greift das Planungsmodul 7 auf mehrere Prognosefunktionen zu, die durch das Prognosemodul 9 bereitgestellt werden und die prognostizierte zukünftige Werte für einen Betriebsparameter der gesteuerten Einrichtung bereitstellen. Handelt es sich bei dem energieumsetzenden Element 3 beispielsweise um eine Fotovoltaikanlage, kann durch die Prognosefunktion eine Sonneneinstrahlung oder bereits direkt ein voraussichtlicher Verlauf der durch das energieumsetzende Element 3 bereitgestellten Energie als Rückgabewert einer Planungsfunktion bereitgestellt werden.

Das Steuermodul 8 stellt eine Steuerfunktion bereit, die automatisch periodisch aufgerufen wird, um Steuerparameter für die energieumsetzenden Elemente 3, 4, 5 vorzugeben bzw. anzupassen. Die Vorgabe der Steuerparameter soll derart erfolgen, dass ein durch die Planungsfunktion geplanter Energieumsatz für die gesteuerte Einrichtung möglichst exakt erreicht wird. Hierzu wird im Rahmen der Steuerfunktion zunächst eine Informationsfunktion des Planungsmoduls 7 aufgerufen, die einen für den momentanen Betriebszeitpunkt geplanten Energieumsatz der energieumsetzenden Elemente 3, 4, 5 zurückliefert. Zudem wird eine Erfassungsfunktion des Erfassungsmoduls 6 aufgerufen, die den momentanen tatsächlichen Energieumsatz der energieumsetzenden Elemente 3, 4, 5 zurückliefert. Im einfachsten Fall werden die durch die Messeinrichtungen 10 erfassten und im Erfassungsmodul 6 zwischengespeicherten Werte zurückgegeben. Die Erfassungsfunktion kann jedoch zusätzlich eine Datenverarbeitung durchführen, um die zurückgegebenen Erfassungswerte aus den Messwerten zu berechnen.

Die Steuerfunktion kann aus den durch die Erfassungsfunktion und die Informationsfunktion bereitgestellten Werten eine Abweichung zwischen dem geplanten Energieumsatz und dem momentanen tatsächlichen Energieumsatz ermitteln und Steuerparameter bereitstellen, die die energieumsetzenden Elemente 3, 4, 5 derart steuern, dass sich der tatsächliche Energieumsatz dem geplanten Energieumsatz annähert. Im einfachsten Fall kann die Steuerung derart erfolgen, dass der Energieumsatz jedes einzelnen der energieumsetzenden Elemente 3, 4, 5 dem für dieses energieumsetzende Element 3, 4, 5 geplanten Energieumsatz angepasst wird. Häufig ist es jedoch zweckmäßig, bei einem Überschreiten bzw. Unterschreiten eines für eines der Elemente 3, 4, 5 geplanten Energieumsatzes, Steuerparameter eines anderen der energieumsetzenden Elemente 3, 4, 5 anzupassen, um dessen Energieumsatz anzupassen. Ist beispielsweise eine durch eine Fotovoltaikanlage bereitgestellte Energie kleiner als geplant, kann ein Verbraucher, beispielsweise eine Klimaanlage, angesteuert werden, um dessen Energieumsatz zu reduzieren.

Fig. 2 zeigt ein weiteres Ausführungsbeispiel eines Energiemanagementsystems 11 zur Steuerung einer an ein nicht gezeigtes Energieversorgungsnetz angeschlossenen gesteuerten Einrichtung 12. Ein wesentlicher Unterschied zum in Fig. 1 gezeigten Energiemanagementsystem 1 ist, dass die Module des in Fig. 2 gezeigten Energiemanagementsystems 11 über ein gemeinsames Kommunikationsnetzwerk 13 kommunizieren, das die Kommunikationsverbindungen zwischen den einzelnen Modulen bereitstellt. Das Kommunikationsnetzwerk 13 ist TCP/IP-basiert. Die Module des Energiemanagementsystems stellen ihre Funktionen über das Kommunikationsnetzwerk 13 als netzwerkaufrufbare Funktionen bereit, die beispielsweise über SOAP aufrufbar sind.

Das Erfassungsmodul 14 dient ebenso wie das zur Fig. 1 erläuterte Erfassungsmodul 6 zur Erfassung wenigstens eines einen momentanen Energieumsatz wenigstens einer der energieumsetzenden Elemente 3, 4, 5 betreffenden Erfassungsparameters. Der erfasste Erfassungsparameter wird durch eine der gesteuerten Einrichtung 12 zugeordnete Automatisierungseinrichtung 15 bereitgestellt. Die Automatisierungseinrichtung 15 übernimmt die grundlegenden Datenerfassungs- und Steuerungsaufgaben für die energieumsetzenden Elemente 3, 4, 5. Erfassungswerte werden über ein automatisierungseinrichtungsseitiges Netzwerk mit einem Netzwerkprotokoll zur Automatisierung, beispielsweise BACnet oder OPC UA, bereitgestellt. Um diese Erfassungswerte für die Erfassungseinrichtung 14 bereitzustellen, umfasst das Energiemanagementsystem 11 ein Kommunikationsmodul 16, das eine Kommunikationsfunktion zur Kommunikation mit der Automatisierungseinrichtung 15 bereitstellt.

Konkret setzt das Kommunikationsmodul 16 Anfragen des Erfassungsmoduls 14 zur Erfassung von Erfassungswerten, die über das Kommunikationsnetzwerk 13 empfangen wurden, auf das automatisierungseinrichtungsseitige Netzwerk um und leitet sie an die Automatisierungseinrichtung 15 weiter. Antworten der Automatisierungseinrichtung 15 werden wiederum an die Erfassungseinrichtung 14 bereitgestellt. Die durch das Erfassungsmodul 14 bereitgestellte Erfassungsfunktion fragt über das Kommunikationsmodul 16 Erfassungswerte von der Automatisierungseinrichtung 15 ab und verarbeitet sie optional weiter, um einen jeweiligen Energieumsatz für die energieumsetzenden Elemente 3, 4, 5 zu ermitteln.

Das Erfassungsmodul 14 umfasst keinen eigenen Datenspeicher zum Speichern von Erfassungswerten, sondern ruft eine durch das Speichermodul 17 bereitgestellte Speicherfunktion auf. Als Speicherfunktion wird eine Speicherfunktion zur Ereignisprotokollierung genutzt, die Erfassungswerte bzw. die berechneten Energieumsätze mit einem Zeitstempel versieht und in einen Speicher des Speichermoduls schreibt. Im Speichermodul 17 können flüchtige und/oder nicht flüchtige Speicher zur Speicherung von Daten genutzt werden.

Das Steuermodul 18 stellt eine periodisch aufgerufene Steuerfunktion bereit, die, in Abhängigkeit von erfassten Erfassungswerten und einer vorangehend erfolgten Planung des zukünftigen Energieumsatzes, Steuerparameter für die energieumsetzenden Elemente 3, 4, 5 bereitstellt. Das grundlegende Vorgehen entspricht dem zu Fig. 1 bezüglich des Steuermoduls 8 erläuterten Vorgehen. Zur Ermittlung der Steuerparameter durch die Steuerfunktion wird jedoch ausgenutzt, dass das Energiemanagementsystem 11 über ein Speichermodul 17 verfügt. Wie bereits erläutert sind in dem Speichermodul 17 mit Zeitstempeln versehende Erfassungswerte gespeichert. Ergänzend wird durch das Planungsmodul 19 ein Energieumsatz wenigstens eines der energieumsetzenden Elemente 3, 4, 5 sowie ein Gesamtenergieumsatz der gesteuerten Einrichtung ermittelt und durch Nutzung einer weiteren Speicherfunktion des Speichermoduls 17 im Speichermodul 17 gespeichert. Die weitere Speicherfunktion speichert Planungsdaten in einer Datenbank des Speichermoduls, um einen leichteren Zugriff auf die Planungsdaten zu ermöglichen.

Zur Ermittlung des Steuerparameters werden durch die Steuerfunktion Abruffunktionen, die durch das Speichermodul 17 bereitgestellt werden, aufgerufen, um die aktuellen Erfassungswerte sowie die für den momentanen Betriebszeitpunkt geplanten Energieumsätze aus dem Speichermodul 17 auszulesen. Aus diesen Werten wird, wie zu Fig. 1 erläutert, ein Steuerparameter bestimmt. Dieser wird durch Aufruf einer Kommunikationsfunktion des Kommunikationsmoduls 16 an die Automatisierungseinrichtung 15 übertragen, die die gesteuerten Einrichtungen 3, 4, 5 zur Anpassung des jeweiligen Steuerparameters ansteuert.

Die Planungsfunktion des Planungsmoduls 19 wird zu vorgegebenen Zeitpunkten aufgerufen. Zur Planung des Energieumsatzes während eines zukünftigen Zeitintervalls wird zunächst eine Statistikfunktion des Prognosemoduls 20 aufgerufen, die eine Historie des Energieumsatzes der energieumsetzenden Elemente 3, 4, 5 auswertet. Hierzu ruft die Statistikfunktion eine Abruffunktion des Speichermoduls 17 auf, um einen historischen bzw. zeitlichen Verlauf der Erfassungswerte aus dem Ereignisprotokoll auszulesen, in das sie zuvor durch Aufrufe einer Speicherfunktion durch die Erfassungsfunktion geschrieben wurden. Durch eine statistische Auswertung dieser Daten unter Berücksichtigung von Tageszeit und Wochentag wird ein typischer zeitlicher Verlauf für die Energieumsätze der energieumsetzenden Elemente 3, 4, 5 im Planungsintervall bereitgestellt.

Zur Anpassung dieses typischen Verlaufs an äußere Umstände ruft die Planungsfunktion eine durch das Prognosemodul 20 bereitgestellte Prognosefunktion auf, die wenigstens einen einrichtungsextern und energiemanagementsystemextern vorgegebenen Betriebsparameter der gesteuerten Einrichtung prognostiziert, beispielsweise eine erwartete Sonneneinstrahlung, um den Energieumsatz des energieumsetzenden Elements 3, das eine Fotovoltaikanlage ist, zu prognostizieren. Für die Prognose der voraussichtlichen Sonneneinstrahlung im Planungsintervall nutzt das Prognosemodul 20 eine Kommunikationsfunktion des Kommunikationsmoduls 21, mit der Wetterinformationen von einem externen Dienstleister 22, beispielsweise über das Internet, abgerufen werden. Der zeitliche Verlauf des prognostizierten Betriebsparameters wird als Rückgabewert an die Planungsfunktion bereitgestellt. In einer Weiterbildung des Energiemanagementsystems können weitere Betriebsparameter prognostiziert werden bzw. weitere Informationen über die Kommunikationseinrichtung 21 von externen Quellen erfasst werden, beispielsweise Preisinformationen für einen Verbrauch bzw. ein Bereitstellen von Energie aus bzw. in das Energieversorgungsnetz.

Um in Abhängigkeit der prognostizierten Betriebsparameter und eines typischen Verlaufs der Energieumsätze einen optimalen geplanten zeitlichen Verlauf eines Energieumsatzes im Planungsintervall zu ermitteln, wird durch die Planungsfunktion eine Optimierungsfunktion genutzt, die durch das Optimierungsmodul 21 bereitgestellt wird. Beispielsweise kann die Planung derart erfolgen, dass dem Energieversorgungsnetz ein Minimum an Energie entnommen wird oder dass eine durch ein energieerzeugendes Element erzeugte Energie möglichst vollständig durch die gesteuerte Einrichtung selbst genutzt wird. Alternativ oder ergänzend wäre es beispielsweise möglich, Kosten für eine aus dem Energieversorgungsnetz bezogene Energie zu minimieren. Die durch die Optimierungsfunktion bereitgestellten Planungsdaten werden durch die Planungsfunktion anschließend durch Aufrufen einer Speicherfunktion des Speichermodus 17 gespeichert. Zudem werden die Plandaten durch das Planungsmodul 19 durch Nutzung einer Kommunikationsfunktion des Kommunikationsmoduls 21 an eine externe, dem Energieversorgungsnetz zugeordnete Einrichtung 26 übertragen, um einen Energieversorger frühzeitig über einen voraussichtlichen Verlauf des Energieumsatzes der gesteuerten Einrichtung zu informieren.

Das Energiemanagementsystem 11 stellt eine Vielzahl von Informationen über den Betrieb der gesteuerten Einrichtung bereit. Zudem ist es möglich, dass einzelne Funktionen des Energiemanagementsystems, beispielsweise in welcher Form die Plandaten optimiert werden, angepasst werden. Daher ist im Energiemanagementsystem 11 ein Bedienmodul 23 vorgesehen, das Eingaben an einer Bedieneinrichtung 24, beispielweise einer Tastatur, erfasst und durch das Energiemanagementsystem 12 bereitgestellte Informationen auf einer Anzeigevorrichtung 25 darstellen kann. Das Bedienmodul 23 kann auf der Anzeigevorrichtung 25 insbesondere eine grafische Benutzeroberfläche darstellen, die durch die Bedieneinrichtung 24 bedienbar ist und die dem Benutzer Möglichkeiten gibt, eine Konfiguration des Energiemanagementsystems 11 anzupassen, durch eine Planfunktion bereitgestellte Plandaten anzupassen, einzelne Steuerparameter zu ändern oder vorzugeben, Optimierungsziele für die Optimierungsfunktion zu wählen oder ähnliches. In Abhängigkeit der Bedieneingabe werden anschließend entsprechende Funktionen, die durch das Energiemanagementsystem 11 bereitgestellt werden, aufgerufen.

Das gezeigte Energiemanagementsystem ist modular aufgebaut. Beispielsweise ist es möglich, dass weitere Module ergänzt werden, die zusätzliche Optimierungs-, Erfassungs-, Prognose-, Statistik-, Speicher-, Bedien- oder Kommunikationsfunktionen bereitstellen. Zudem können einzelne Module austauschbar sein. Statt des Steuermoduls 18 und des Erfassungsmoduls 14 können beispielsweise das zu Fig. 1 erläuterte Erfassungsmodul 6 und das Steuermodul 8 genutzt werden, um direkt Erfassungsdaten von Messeinrichtungen 10 zu erfassen bzw. die energieumsetzenden Einrichtungen 3, 4, 5 zu steuern. Um den einzelnen Modulen Informationen darüber bereitzustellen, welche Funktionen in dem Energiemanagementsystem 11 verfügbar sind, ist daher das Konfigurationsmodul 27 vorgesehen, wobei es sich bei dem Konfigurationsmodul 27 um ein Speichermodul handelt, das ausschließlich ein Abrufen von Konfigurationsdaten durch die weiteren Module erlaubt. Die im Konfigurationsmodul 27 gespeicherten Daten werden während einer ersten Konfiguration beim Aufbau des Energiemanagementsystems in dem Konfigurationsmodul 27 gespeichert. Module können eine Konfigurationsabfragefunktion des Konfigurationsmoduls 27 nutzen, um zu ermitteln, welche Funktionen eines bestimmten Typs, also beispielsweise welche Prognosefunktionen, bereitstehen, ob eine bestimmte Funktion bereitsteht und durch welches Modul eine bestimmte Funktion bereitgestellt wird.

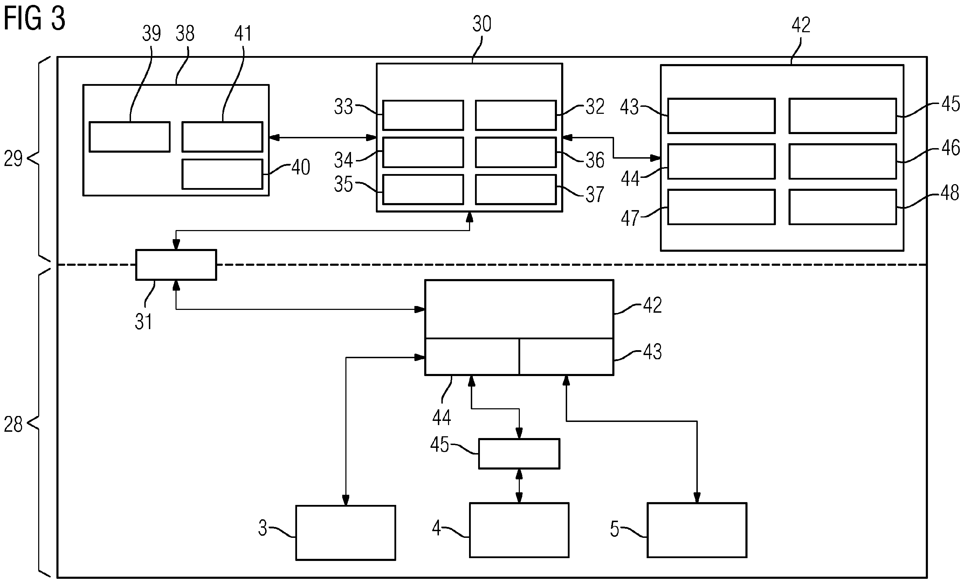

Fig. 3 zeigt ein drittes Ausführungsbeispiel eines Energiemanagementsystems zur Steuerung einer gesteuerten Einrichtung. Das Energiemanagementsystem gemäß Fig. 3 ist komplexer als die in Fig. 1 und 2 gezeigten Energiemanagementsysteme, weshalb die Kommunikation zwischen den Modulen des Energiemanagementsystems nur schematisch angedeutet ist. Durch das Energiemanagementsystem 29 wird eine gesteuerte Einrichtung 28 gesteuert, die als energieumsetzendes Element 3 eine Fotovoltaikanlage, als energieumsetzendes Element 4 eine Batterie und als energieumsetzendes Element 5 einen Verbraucher aufweist. Die energieumsetzenden Elemente 3, 4, 5 werden durch eine Automatisierungseinrichtung 42 gesteuert, die über eine digitale Schnittstelle 44 mit dem energieumsetzenden Element 3 und über einen Protokollumsetzer 45 auf ein anderes digitales Protokoll mit dem energieumsetzenden Element 4 kommuniziert. Durch eine analoge Ein-/Ausgabeschnittstelle 43 wird das energieumsetzende Element 5 gesteuert und ein Energieumsatz des energieumsetzenden Elements 5 erfasst. Die Kommunikation zwischen der Automatisierungseinrichtung 42 und dem Energiemanagementsystem 29 erfolgt durch ein dem Energiemanagementsystem 29 zugeordnetes Kommunikationsmodul 31, das als Funktion eine Protokollumsetzung bereitstellt. Die Kommunikation zwischen dem Kommunikationsmodul 31 und der Automatisierungseinrichtung 42 erfolgt über BACnet, die Kommunikation zwischen dem Kommunikationsmodul 31 und den weiteren Modulen erfolgt über SOAP.

Eine erste Gruppe von Modulen bildet ein Klientensystem 30, das vor Ort im Bereich der gesteuerten Einrichtung angeordnet ist und Funktionen ausschließlich für die gesteuerte Einrichtung 28 zur Verfügung stellt. Das Klientensystem 30 umfasst ein Planungsmodul 33, das, wie die zu Fig. 1 und 2 erläuterten Planungsmodule 7, 19, zukünftige Energieumsätze der energieumsetzenden Elemente und der gesamten gesteuerten Einrichtung plant. Durch ein Erfassungsmodul 32 werden, wie zu dem Erfassungsmodul 14 erläutert, durch die Automatisierungseinrichtung 42 über das Kommunikationsmodul 31 bereitgestellte Erfassungswerte erfasst. Ein Steuermodul 34 steuert wie zu dem Steuermodul 18 erläutert die Automatisierungseinrichtung 42 über das Kommunikationsmodul 31. Zur Informationsausgabe und zur Erfassung von Bedieneingaben ist ein Bedienmodul 36 vorgesehen, das dem zu Fig. 2 erläuterten Bedienmodul 23 entspricht.

Optional kann im Klientensystem 30 ein Umgebungssimulationsmodul 37 vorgesehen sein, das Funktionen zur Steuerung eines nicht gezeigten Simulationssystems bereitstellt, durch das einzelne oder alle energieumsetzenden Elemente 3, 4, 5 zum Testen des Energiemanagementsystems simuliert werden können, wenn das Energiemanagementsystem 29 nicht mit der gesteuerten Einrichtung 28 verbunden ist. Das Klientensystem 30 umfasst zudem ein Kommunikationsmodul 35, durch das einerseits eine Kommunikation mit nicht gezeigten energiemanagementsystemexternen und einrichtungsexternen Diensten möglich ist, beispielsweise mit dem Energieversorgungsnetz zugeordneten Diensten, andererseits eine Netzwerkkommunikation mit den weiteren im Folgenden erläuterten Modulen erfolgt.

Die nicht im Klientensystem 30 aufgenommenen Module werden im Energiemanagementsystem 29 über Funktionen des Kommunikationsmoduls 35 über ein externes Netzwerk, beispielsweise ein VPN oder das Internet, angesprochen.

Diese Module teilen sich in zwei Gruppen, nämlich die Speichermodule 38 und die externe Funktionen bereitstellenden Module 42. Die über das externe Netzwerk angesprochenen Module können von mehreren Energiemanagementsystemen mehrerer gesteuerter Einrichtungen gemeinsam genutzt werden. Sie können insbesondere durch einen oder mehrere externe Dienstleister bereitgestellt werden.

Als Speichermodule 38 sind ein Datenbankmodul 39, das eine Datenbankfunktionalität zum Ablegen von Planungsdaten und/oder Erfassungsdaten bereitstellt, ein Ereignisprotokollmodul 40, das Erfassungsdaten mit Zeitstempeln und weitere Statusdaten des Energiemanagementsystems 29 sammeln kann, und ein Konfigurationsmodul 41, das funktional dem Konfigurationsmodul 27 gemäß Fig. 2 entspricht, vorgesehen.

Als externe Funktionen bereitstellende Module 42 sind ein Wettervorhersagemodul 43, dass Wettervorhersageinformationen sammelt und bereitstellt, ein Fotovoltaikvorhersagemodul 44, das die Funktionen des Wettervorhersagemoduls 43 nutzt und durch Simulationsprozesse einen Energieumsatz des Fotovoltaikmoduls sowie weitere Betriebsparameter des Fotovoltaikmoduls voraussagen kann, und ein Energiegatewaymodul 47, das als Kommunikationsmodul zur Kommunikation mit einem einen Energieanbieter zugeordneten System ausgebildet ist, um eine Bereitstellung von Planungsdaten an den Energieanbieter und eine Anpassung der Planungsdaten in Abhängigkeit von durch den Energieanbieter bereitgestellten Daten zu ermöglichen, vorgesehen. Durch ein Statistikmodul 45 wird durch eine Auswertung von historischen Daten, die durch eine Kommunikation mit dem Ereignisprotokollmodul 40, dem Datenbankmodul 39 oder weiteren Quellen ermittelt werden, ein zukünftiges Lastprofil vorausgesagt, wie in Fig. 2 bezüglich der Statistikfunktion erläutert wurde. Durch ein Prognosemodul 46 für Elektrofahrzeuge kann durch eine Kommunikation mit relevanten Elektrofahrzeugen im Umfeld der gesteuerten Einrichtung prognostiziert werden, wann welche der Elektrofahrzeuge an der gesteuerten Einrichtung eintreffen, ob diese die gesteuerte Einrichtung voraussichtlich zum Laden des Elektrofahrzeugs nutzen und welche Energiemenge zum Laden dieser Fahrzeuge erforderlich ist.

Als weitere externe Funktionen bereitstellende Module 42 könnten nicht gezeigte weitere Statistikmodule vorgesehen sein, die durch eine statistische Auswertung einen voraussichtlichen Verlauf des Energieumsatzes der gesteuerten Einrichtung für die nächsten 30 Tage und/oder für das nächste Jahr voraussagen. Als Prognosemodul kann zudem ein Modul vorgesehen sein, das thermische Kapazitäten der gesteuerten Einrichtung oder die Qualität eines Vakuums in der gesteuerten Einrichtung prognostiziert und somit Rückschlüsse auf Energien, die zur Klimatisierung bzw. zur Aufrechterhaltung eines Vakuums notwendig sind, ermöglicht.

Aufgrund der zahlreichen im Energiemanagementsystem 29 genutzten Statistik- und Prognosemodule stehen für das Planungsmodul 33 sehr umfangreiche und komplexe Datensätze zur Verfügung um einen zukünftigen Energieumsatz zu planen. Eine Optimierung dieser Planung ist relativ rechenaufwendig, muss jedoch nur zu bestimmten Zeiten durchgeführt werden. Es ist daher vorteilhaft, die Optimierung eines zeitlichen Verlauf des zukünftigen Energieumsatzes zumindest teilweise in das Optimierungsmodul 48 auszulagern, das funktional im Wesentlichen dem zu Fig. 2 beschriebenen Optimierungsmodul 21 entspricht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Energiemanagementsystem zur Steuerung einer an ein Energieversorgungsnetz angeschlossenen gesteuerten Einrichtung (2, 12, 28) mit mehreren energieumsetzenden Elementen (3, 4, 5), wobei die Summe der maximalen Energieumsätze der energieumsetzenden Elemente (3, 4, 5) wenigstens 3 kW ist, wobei das Energiemanagementsystem (1, 11, 29) mehrere Module umfasst, die jeweils wenigstens eine im Rahmen der Steuerung der gesteuerten Einrichtung (2, 12, 28) genutzte Funktion bereitstellen, wobei die Module jeweils als separate Hardware-Bauelemente ausgebildet sind, wobei als Funktionen wenigstens eine Planungsfunktion zur Planung eines zukünftigen Energieumsatzes wenigstens eines der energieumsetzenden Elemente (3, 4, 5), wenigstens eine Erfassungsfunktion zur Erfassung von wenigstens einem einen momentanen Energieumsatz wenigstens eines der energieumsetzenden Elemente (3, 4, 5) betreffenden Erfassungsparameters und wenigstens eine Steuerfunktion zur Vorgabe wenigstens eines einen Energieumsatz wenigstens eines der energieumsetzenden Elements (3, 4, 5) beeinflussenden Steuerparameters bereitgestellt werden, wobei jedes der Module ausgebildet ist, mit jeweils wenigstens einem weiteren der Module über eine jeweilige Kommunikationsverbindung zu kommunizieren, wodurch Funktionen des Moduls durch das weitere Modul nutzbar sind und/oder Funktionen des weiteren Moduls durch das Modul nutzbar sind und wobei das Energiemanagementsystem (1, 11, 29) als wenigstens eines der Module ein Speichermodul (17, 38) umfasst, das an wenigstens ein weiteres der Module Funktionen zum Abruf von Konfigurationsdateien bereitstellt, die beschreiben, welche Funktionen in dem Energiemanagementsystem (1, 11, 29) bereitgestellt sind und von welchen Modulen diese bereitgestellt werden.

2. Energiemanagementsystem nach Anspruch 1, **dadurch gekennzeichnet, dass** es wenigstens ein Erfassungsmodul (6, 14, 32) zur Bereitstellung wenigstens einer der wenigstens einen Erfassungsfunktion, wenigstens ein Planungsmodul (7, 19, 33) zu Bereitstellung wenigstens einer der wenigstens einen Planungsfunktion und ein Steuermodul (8, 18, 34) zur Bereitstellung wenigstens einer der wenigstens einen Steuerfunktion umfasst.

3. Energiemanagementsystem nach Anspruch 1 oder 2, **dadurch gekennzeichnet, dass** die Kommunikationsverbindung ein Kommunikationsnetzwerk (13) ist, wobei die Module jeweils eine Kommunikationseinrichtung zur Verbindung mit dem Kommunikationsnetzwerk umfassen.

4. Energiemanagementsystem nach Anspruch 3, **dadurch gekennzeichnet, dass** wenigstens drei oder alle der Module über das Kommunikationsnetzwerk (13) oder eines der Kommunikationsnetzwerke (13) kommunizieren.

5. Energiemanagementsystem nach einem der vorangegangenen Ansprüche, **dadurch gekennzeichnet, dass** das Speichermodul (17, 38) an wenigstens ein weiteres der Module Funktionen zur Speicherung bereitstellt.

6. Energiemanagementsystem nach einem der vorangehenden Ansprüche, **dadurch gekennzeichnet, dass** es als wenigstens eines der Module ein Kommunikationsmodul (16, 21, 31, 35) umfasst, das an wenigstens ein weiteres der Module wenigstens eine Funktion zur Kommunikation mit wenigstens einer energiemanagementsystemexternen Einrichtung (22, 26) bereitstellt.

7. Energiemanagementsystem nach einem der vorangehenden Ansprüche, **dadurch gekennzeichnet, dass** es als wenigstens eines der Module ein Prognosemodul (9, 20) umfasst, das an wenigstens ein weiteres der Module wenigstens eine Funktion zur Prognose wenigstens eines zukünftigen Wertes für einen Betriebsparameter der gesteuerten Einrichtung (2, 12, 28) bereitstellt, wobei der Betriebsparameter durch Einflüsse außerhalb des Energiemanagementsystems (11, 11, 29) und der gesteuerten Einrichtung (2, 12, 28) bestimmt wird.

8. Energiemanagementsystem nach einem der vorangehenden Ansprüche, **dadurch gekennzeichnet, dass** es als wenigstens eines der Module ein Optimierungsmodul (21, 48) umfasst, das an wenigstens ein weiteres der Module wenigstens eine Funktion zur von wenigstens einer vorgegeben Randbedingung abhängigen Optimierung wenigstens eines den Energieumsatz der gesteuerten Einrichtung (2, 12, 28) betreffenden Betriebsparameters bereitstellt.

9. Energiemanagementsystem nach einem der vorangehenden Ansprüche, **dadurch gekennzeichnet, dass** es als wenigstens eines der Module ein Bedienmodul (23, 36) umfasst, das an wenigstens ein weiteres der Module wenigstens eine Funktion zur Datenausgabe an einen Benutzer über eine Ausgabevorrichtung (25) bereitstellt und/oder Benutzereingaben an einer Bedieneinrichtung (24) erfasst und zum Aufruf von wenigstens einer Funktion wenigstens eines weiteren der Module in Abhängigkeit der Bedieneingaben ausgebildet ist.

10. Computersoftwareprodukt, umfassend mehrere verschiedene Computerprogramme, **dadurch gekennzeichnet, dass** bei einer Ausführung der Computerprogramme auf jeweils wenigstens einer Recheneinrichtung und bei Vernetzung dieser Recheneinrichtungen in einem Kommunikationsnetzwerk (13), die vernetzten Recheneinrichtungen ein Energiemanagementsystem (1, 11, 29) gemäß eines der vorangehenden Ansprüche ausbilden, wobei die Recheneinrichtungen jeweils ein Modul bilden, wobei die Module jeweils als separate Hardware-Bauelemente ausgebildet sind, wobei das Modul wenigstens eine Funktion des Energiemanagementsystems (1, 11, 29) bereitstellt, wobei jedes der Module ausgebildet ist, mit jeweils wenigstens einem weiteren der Module über das Kommunikationsnetzwerk (13) zu kommunizieren, wodurch Funktionen des Moduls durch das weitere Modul nutzbar sind und/oder Funktionen des weiteren Moduls durch das Modul nutzbar sind und wobei ein Speichermodul (17, 38) dazu ausgelegt ist, an wenigstens ein weiteres der Module Funktionen zum Abruf von Konfigurationsdateien bereitzustellen, die beschreiben, welche Funktionen in dem Energiemanagementsystem (1, 11, 29) bereitgestellt sind und von welchen Modulen diese bereitgestellt werden.

11. Verfahren zur Steuerung einer an ein Energieversorgungsnetz angeschlossenen gesteuerten Einrichtung mit mehreren energieumsetzenden Elementen durch ein Energiemanagementsystem, wobei die Summe der maximalen Energieumsätze der Elemente wenigstens 3 kW ist, wobei das Energiemanagementsystem mehrere Module umfasst, durch die jeweils wenigstens eine im Rahmen der Steuerung der gesteuerten Einrichtung genutzte Funktion bereitstellt wird, wobei die Module jeweils als separate Hardware-Bauelemente ausgebildet sind, wobei als Funktionen wenigstens eine Planungsfunktion, durch die ein zukünftiger Energieumsatzes wenigstens eines der energieumsetzenden Elemente der gesteuerten Einrichtung geplant wird, wenigstens eine Erfassungsfunktion, durch die wenigstens ein einen Energieumsatz wenigstens eines der energieumsetzenden Elemente beschreibender Erfassungsparameter erfasst wird, und eine Steuerfunktion, durch die wenigstens ein einen Energieumsatz wenigstens eines der energieumsetzenden Elements beeinflussender Steuerparameter vorgegeben wird, bereitgestellt werden, wobei durch jedes der Module mit jeweils wenigstens einem anderen der Module über eine Kommunikationsverbindung kommuniziert wird, wobei Funktionen des Moduls durch Funktionen des weiteren Moduls genutzt werden und/oder Funktionen des weiteren Moduls durch das Modul genutzt werden und wobei ein Speichermodul (17, 38) des Energiemanagementsystems (1, 11, 29) an wenigstens ein weiteres der Module Funktionen zum Abruf von Konfigurationsdateien bereitstellt, die beschreiben, welche Funktionen in dem Energiemanagementsystem (1, 11, 29) bereitgestellt sind und von welchen Modulen diese bereitgestellt werden.

## Claims

1. Energy management system for controlling a controlled facility (2, 12, 28) that is connected to an energy supply grid and that has a plurality of energy converting elements (3, 4, 5), wherein the sum of the maximum energy conversions of the energy-converting elements (3, 4, 5) is at least 3 kW, wherein the energy management system (1, 11, 29) comprises a plurality of modules that each provide at least one function used in the course of controlling the controlled facility (2, 12, 28), wherein the modules are each realized as separate hardware component parts, wherein there are provided, as functions, at least one planning function for planning a future energy conversion of at least one of the energy-converting elements (3, 4, 5), at least one acquisition function for acquiring at least one acquisition parameter that relates to an instantaneous energy conversion of at least one of the energy-converting elements (3, 4, 5), and at least one control function for specifying at least one control parameter that influences an energy conversion of at least one of the energy-converting elements (3, 4, 5), wherein each of the modules is designed to communicate with respectively at least one other of the modules via a respective communication link, whereby functions of the module can be used by the other module and/or functions of the other module can be used by the module and wherein the energy management system (1, 11, 29) comprises, as at least one of the modules, a storage module (17, 38) that provides to at least one other of the modules functions for calling-up configuration files which describe which functions are provided in the energy management system (1, 11, 29) and from which modules these are provided.

2. Energy management system according to Claim 1, **characterized in that** it comprises at least one acquisition module (6, 14, 32) for providing at least one of the at least one acquisition functions, at least one planning module (7, 19, 33) for providing at least one of the at least one planning functions, and a control module (8, 18, 34) for providing at least one of the at least one control functions.

3. Energy management system according to Claim 1 or 2, **characterized in that** the communication link is a communication network (13), wherein the modules each comprise a communication means for connecting to the communication network.

4. Energy management system according to Claim 3, **characterized in that** at least three or all of the modules communicate via the communication network (13) or one of the communication networks (13).

5. Energy management system according to any one of the preceding claims, **characterized in that** the storage module (17, 38) provides to at least one other of the modules functions for storing.

6. Energy management system according to any one of the preceding claims, **characterized in that** it comprises, as at least one of the modules, a communication module (16, 21, 31, 35) that provides to at least one other of the modules at least one function for communicating with at least one facility (22, 26) that is external to the energy management system.

7. Energy management system according to any one of the preceding claims, **characterized in that** it comprises, as at least one of the modules, a prognosis module (9, 20) that provides to at least one other of the modules at least one function for predicting at least one future value for an operating parameter of the controlled facility (2, 12, 28), wherein the operating parameter is determined by influences outside of the energy management system (1, 11, 29) and the controlled facility (2, 12, 28).

8. Energy management system according to any one of the preceding claims, **characterized in that** it comprises, as at least one of the modules, an optimization module (21, 48) that provides to at least one other of the modules at least one function for optimizing, dependent on at least one predefined boundary condition, at least one operating parameter that relates to the energy conversion of the controlled facility (2, 12, 28).

9. Energy management system according to any one of the preceding claims, **characterized in that** it comprises, as at least one of the modules, an operating module (23, 36) that provides to at least one other of the modules at least one function for outputting data to a user via an output device (25), and/or that acquires user inputs to an operating means (24), and that is designed to call up at least one function of at least one other of the modules in dependence on the operating inputs.

10. Computer software product, comprising a plurality of differing computer programs, **characterized in that**, in the case of the computer programs being executed on respectively at least one computing means and these computing means being interconnected in a communication network (13), the interconnected computing means realize an energy management system (1, 11, 29) according to any one of the preceding claims, wherein the computing means each constitute a module, wherein the modules are each realized as separate hardware component parts, wherein the module provides at least one function of the energy management system (1, 11, 29), wherein each of the modules is designed to communicate with respectively one other of the modules via the communication network (13), whereby functions of the module can be used by the other module and/or functions of the other module can be used by the module and wherein a storage module (17, 38) is designed to provide to at least one other of the modules functions for calling-up configuration files which describe which functions are provided in the energy management system (1, 11, 29) and from which modules these are provided.

11. Method for controlling, by an energy management system, a controlled facility that is connected to an energy supply grid and that has a plurality of energy converting elements, wherein the sum of the maximum energy conversions of the elements is at least 3 kW, wherein the energy management system comprises a plurality of modules by which the respectively at least one function used in the course of controlling the controlled facility is provided, wherein the modules are each realized as separate hardware component parts, wherein there are provided, as functions, at least one planning function by which a future energy conversion of at least one of the energy-converting elements of the controlled facility is planned, at least one acquisition function by which the at least one acquisition parameter that describes an energy conversion of at least one of the energy-converting elements is acquired, and a control function by which at least one control parameter that influences an energy conversion of at least one of the energy-converting elements is predefined, wherein each of the modules communicates with respectively at least one other of the modules via a communication link, whereby functions of the module are used by the other module and/or functions of the other module are used by the module and wherein a storage module (17, 38) of the energy management system (1, 11, 29) provides to at least one other of the modules functions for calling-up configuration files which describe which functions are provided in the energy management system (1, 11, 29) and from which modules these are provided.

## Revendications

1. Système de gestion d'énergie pour commander un dispositif (2, 12, 28) commandé, raccordé à un réseau d'alimentation en énergie et ayant plusieurs éléments (3, 4, 5) convertissant de l'énergie, la somme des conversions maximum d'énergie des éléments (3, 4, 5) convertissant de l'énergie étant au moins de 3 kW,
dans lequel
le système (1, 11, 29) de gestion d'énergie comprend plusieurs modules, qui, chacun, mettent à disposition au moins une fonction utilisée dans le cadre de la commande du dispositif (2, 12, 28) commandé, les modules étant constitués chacun sous la forme de composants distincts de matériel, dans lequel il est mis à disposition, comme fonctions, au moins une fonction de planification pour planifier une conversion d'énergie à venir d'au moins l'un des éléments (3, 4, 5) convertissant de l'énergie, au moins une fonction de détection pour détecter au moins un paramètre de détection concernant au moins une conversion d'énergie instantanée d'au moins l'un des éléments (3, 4, 5) convertissant de l'énergie et au moins une fonction de commande pour prescrire au moins un paramètre de commande influençant une conversion d'énergie d'au moins l'un des éléments (3, 4, 5) convertissant de l'énergie, chacun des modules étant constitué pour communiquer avec, respectivement, au moins un autre des modules par une liaison respective de communication, grâce à quoi des fonctions du module peuvent être utilisées par l'autre module et/ou des fonctions de l'autre module peuvent être utilisées par le module, et dans lequel le système (1, 11, 29) de gestion d'énergie comprend, comme au moins l'un des modules, un module (17, 38) de mémoire, qui met à disposition d'au moins un autre des modules des fonctions d'appel de fichiers de configuration, qui décrivent les fonctions qui sont mises à disposition dans le système (1, 11, 29) de gestion d'énergie et les modules qui les mettent à disposition.

2. Système de gestion d'énergie suivant la revendication 1, **caractérisé en ce qu'**il comprend au moins un module (6, 14, 32) de détection pour mettre à disposition au moins l'une de la au moins une fonction de détection, au moins un module (7, 19, 33) de planification pour mettre à disposition au moins l'une de la au moins une fonction de planification et un module (8, 18, 34) de commande pour mettre à disposition au moins l'une de la au moins une fonction de commande.

3. Système de gestion d'énergie suivant la revendication 1 ou 2, **caractérisé en ce que** la liaison de communication est un réseau (13) de communication, les modules comprenant chacun un dispositif de communication pour la liaison au réseau de communication.

4. Système de gestion d'énergie suivant la revendication 3, caractérisé en qu'au moins trois ou tous les modules communiquent par le réseau (13) de communication ou par l'un des réseaux (13) de communication.

5. Système de gestion d'énergie suivant l'une des revendications précédentes, **caractérisé en ce que** le module (17, 38) de mémoire met des fonctions de mise en mémoire à dispositif d'au moins un autre des modules.

6. Système de gestion d'énergie suivant l'une des revendications précédentes, **caractérisé en ce qu'**il comprend, comme au moins l'un des modules, un module (16, 21, 31, 35) de communication, qui met à disposition d'au moins un autre des modules au moins une fonction de communication avec au moins un dispositif (22, 26) extérieur au système de gestion d'énergie.

7. Système de gestion d'énergie suivant l'une des revendications précédentes, **caractérisé en ce qu'**il comprend, comme au moins l'un des modules, un module (9, 20) de pronostic, qui met à disposition d'au moins un autre des modules, au moins une fonction de pronostic d'au moins une valeur à venir d'un paramètre de fonctionnement du dispositif (2, 12, 28) commandé, le paramètre de fonctionnement étant déterminé par des influences à l'extérieur du système (11, 11, 29) de gestion d'énergie et du dispositif (2, 12, 28) commandé.

8. Système de gestion d'énergie suivant l'une des revendications précédentes, **caractérisé en ce qu'**il comprend, comme au moins l'un des modules, un module (21, 48) d'optimisation, qui met à disposition d'au moins un autre des modules, au moins une fonction d'optimisation, dépendante d'au moins une condition aux limites, donnée à l'avance, d'au moins un paramètre de fonctionnement concernant la conversion d'énergie du dispositif (2, 12, 28) commandé.

9. Système de gestion d'énergie suivant l'une des revendications précédentes, **caractérisé en ce qu'**il comprend, comme au moins l'un des modules, un module (23, 36) de service, qui met à disposition d'au moins un autre des modules au moins une fonction d'émission de données vers un utilisateur par l'intermédiaire d'un système (25) d'émission et/ou détecte des entrées d'utilisateur sur un dispositif (24) de service et est constitué pour appeler au moins une fonction d'au moins un autre des modules en fonction des entrées de service.

10. Produit logiciel d'ordinateur, comprenant plusieurs programmes d'ordinateur différents, **caractérisé en ce que**, lors d'une réalisation des programmes d'ordinateur sur, respectivement, au moins un dispositif informatique, et lors d'une mise en réseau de ces dispositifs informatiques en un réseau (13) de communication, les dispositifs informatiques mis en réseau constituent un système (1, 11, 29) de gestion d'énergie suivant l'une des revendications précédentes, les dispositifs informatiques formant chacun un module, les modules étant constitués chacun sous la forme de composants distincts de matériel, le module mettant à disposition au moins une fonction du système (1, 11, 29) de gestion d'énergie, chacun des modules étant constitué pour communiquer avec, respectivement, au moins un autre des modules, par le réseau (13) de communication, grâce à quoi des fonctions du module peuvent être utilisées par l'autre module et/ou des fonctions de l'autre module peuvent être utilisées par le module et dans lequel un module (17, 38) de mémoire est conçu pour mettre à disposition d'au moins un autre des modules des fonctions d'appel de fichiers de configuration, qui décrivent les fonctions qui sont mises à disposition dans le système (1, 11, 29) de gestion d'énergie et les modules qui les mettent à disposition.

11. Procédé de commande d'un dispositif commandé, raccordé à un réseau d'alimentation en énergie et ayant plusieurs éléments convertissant de l'énergie, par un système de gestion d'énergie, la somme des conversions maximum d'énergie des élément étant d'au moins 3 kW, le système de gestion d'énergie comprenant plusieurs modules par lesquels, respectivement, au moins une fonction utilisée dans le cadre de la commande du dispositif commandé est mise à disposition, les modules étant constitués chacun sous la forme de composants distincts de matériel, dans lequel il est mis à disposition, comme fonctions (11), au moins une fonction de planification, par laquelle une conversion d'énergie à venir d'au moins l'un des éléments convertissant de l'énergie du dispositif commandé est planifiée, au moins une fonction de détection, par laquelle au moins un paramètre de détection, décrivant une conversion d'énergie d'au moins l'un des éléments convertissant de l'énergie est détectée, et une fonction de commande, par laquelle au moins un paramètre de commande influant sur une conversion d'énergie d'au moins l'un des éléments convertissant de l'énergie est prescrit, dans lequel on fait communiquer chacun des modules avec, respectivement, au moins un autre des modules par une liaison de communication, dans lequel des fonctions du module sont utilisées par des fonction de l'autre module et/ou des fonctions de l'autre module sont utilisées par le module, et dans lequel un module (17, 38) de mémoire du système (1, 11, 29) de gestion d'énergie met à disposition d'au moins un autre des modules des fonctions d'appel de fichiers de configuration, qui décrivent les fonctions du système (1, 11, 29) de gestion d'énergie mises à disposition et les modules qui les mettent à disposition.
